# EUROPÄISCHE PATENTSCHRIFT

(11) **EP 3 990 321 B1**
(45) Veröffentlichungstag und Bekanntmachung des Hinweises auf die Patenterteilung: **27.03.2024**
(21) Anmeldenummer: 20763995.6
(22) Anmeldetag: 10.08.2020
(51) Int. Cl.: B60T 7/04, B60T 7/10, B61H 13/02, G05G 5/00, G05G 5/28, G06F 21/86, H01H 9/28, H01H 13/08, B60T 7/08, H01H 1/64

(54) **SCHIEBEABDECKUNG FÜR HILFERUFEINRICHTUNG IN SCHIENENFAHRZEUGEN**
SLIDING COVER FOR RAIL VEHICLE EMERGENCY SWITCH
COUVERCLE COULISSANT POUR INTERRUPTEUR D'URGENCE POUR VÉHICULE FERROVIAIRE

(30) Priorität: 29.08.2019 DE 102019212997
(43) Veröffentlichungstag der Anmeldung: 04.05.2022
(73) Patentinhaber: Siemens Mobility GmbH, 81739 München (DE)
(72) Erfinder: VESELKA, Radek, 70030 Ostrava (CZ); HÄUSSLER, Andreas, 42659 Solingen (DE)
(74) Vertreter: Siemens Patent Attorneys
(86) Internationale Anmeldenummer: PCT/EP2020/072366
(87) Internationale Veröffentlichungsnummer: WO 2021/037535

(56) Entgegenhaltungen:
- CN-A- 108 615 636
- CN-U- 207 558 665

## Beschreibung

Die Erfindung betrifft eine Abdeckungsvorrichtung für einen Auslösetaster zum Schutz vor einer unbeabsichtigten Betätigung, umfassend eine Abdeckung und eine Abdeckungshalterung, wobei die Abdeckung aus einer geschlossenen Ruheposition in eine offene Position bewegbar ist. Des Weiteren betrifft die Erfindung ein Verfahren eine Hilferufeinrichtung mit einer Abdeckungsvorrichtung sowie ein Schienenfahrzeug mit einer Hilferufeinrichtung und ein Verfahren zum Betreiben einer Hilferufeinrichtung.

Hilferuftaster sind laut TSI-PRM in Schienenfahrzeugen an Rollstuhlstellplätzen und in Universalnasszellen vorgeschrieben. Da diese leicht und auch für mobilitätseingeschränkte Personen bedienbar sein müssen, kommt es häufig zu unbeabsichtigter Auslösung.

Abdeckungen zur Verhinderung einer unbeabsichtigten Betätigung sind bekannt. Die Abdeckungen liegen über den Tastern und müssen vor ihrer Betätigung weggeklappt werden. Ein Beispiel für einen solchen Mechanismus ist in der EP 3 217 591 A1 gezeigt.

Weitere Vorrichtungen zum Schutz vor einer unbeabsichtigten Betätigung eines Tasters sind aus den Dokumenten CN 108 615 636 A und CN 207 558 665 U sowie CN 210 040 010 U bekannt geworden.

Derartige Abdeckungen sind mit einem Handballen oder einem Armstumpf jedoch nicht leicht zu entfernen und die erschweren die Betätigung der Hilferufeinrichtung signifikant.

Der Erfindung liegt die Aufgabe zugrunde, eine Hilferufeinrichtung vorzuschlagen, die für mobilitätseingeschränkte Personen leicht bedienbar ist.

Gelöst wird die Aufgabe durch die Gegenstände der unabhängigen Patentansprüche 1 und 14. Weiterbildungen und Ausgestaltungen der Erfindung finden sich in den Merkmalen der abhängigen Patentansprüche wieder.

Eine erfindungsgemäße Abdeckungsvorrichtung für einen Auslösetaster zum Schutz vor einer unbeabsichtigten Betätigung umfasst eine Abdeckung und eine Abdeckungshalterung. Die Abdeckung ist aus einer geschlossenen Ruheposition, in welcher sie den Auslösetaster abdeckt, in eine offene Position, bewegbar, wobei die Abdeckung an der Abdeckungshalterung verschiebbar gelagert ist, so dass sie aus der geschlossenen Ruheposition in die offene Position entlang der Abdeckungshalterung verschiebbar ist.

Die Erfindung ermöglicht das Entfernen der Abdeckung und die Betätigung eines darunter angeordneten Auslösetasters in einer einzigen Bewegung, insbesondere auch für mobilitätseingeschränkte Personen mit deren Armstumpf oder Handballen.

Die hier vorgestellte Schiebeabdeckung schützt einerseits vor unbeabsichtigter Auslösung, stellt eine beabsichtigte Auslösung jedoch intuitiv sicher. Im Gegensatz zu einer Abdeckungsklappe, die unter Einwirkung einer von außen aufgebrachten Kraft aufgeklappt oder verbogen werden muss, ist die Erfindung relativ robust, auch gegen Vandalismus. Eine Abdeckungsklappe ist hingegen leicht abzubrechen oder auch unbeabsichtigt, beispielsweise in Panik, zu beschädigen. Darüber hinaus birgt die erfindungsgemäße Abdeckung keinerlei Verletzungsgefahren durch hervorstehende Teile.

Dennoch können gemäß der Erfindung für den Fahrzeugbetreiber unangenehme und kostenwirksame Fehlalarme vermieden werden.

Gemäß einer ersten Weiterbildung der Erfindung weist die Abdeckungshalterung eine Führung, insbesondere eine Linearführung, zur Verschiebung der Abdeckung entlang einer vorgegebenen Kurve, insbesondere entlang einer geradlinigen Strecke, zwischen der geschlossenen Ruheposition und der offenen Position auf, so dass die Abdeckung entlang der vorgegebenen Kurve zwischen der geschlossenen Ruheposition und der offenen Position gegenüber der Abdeckungshalterung verschiebbar geführt ist. Die Abdeckung ist insbesondere ausschließlich entlang der vorgegebenen Kurve zwischen der geschlossenen Ruheposition und der offenen Position gegenüber der Abdeckungshalterung verschiebbar geführt. Weitere Bewegungen der Abdeckung relativ zur Abdeckungshalterung sind dadurch unterbunden.

Weitergebildet umfasst die Führung der Abdeckungsvorrichtung Schienen, entlang welcher die Abdeckung, insbesondere linear, verschiebbar geführt ist.

Ist die Abdeckung beispielsweise entlang einer linearen Schienenführung bewegbar, kann die Richtung, in welche die Abdeckung aus der geschlossenen Ruheposition in die offene Position verschiebbar ist, in einer vorgegebenen, bestimmungsgemäßen Orientierung der Abdeckungsvorrichtung lotrecht von unten, aus der geschlossenen Ruheposition, nach oben in die offene Position vorgegeben sein.

Gemäß einer weiteren Weiterbildung umfasst die Abdeckungsvorrichtung eine Feder, die derart vorgespannt ist, dass sie eine Kraft auf die Abdeckung ausübt, welche in Richtung der Verschiebung der Abdeckung aus der offenen Position in die geschlossene Ruheposition wirkt, so dass die Abdeckung ohne Einwirkung weiterer äußerer Kräfte auf die Abdeckung in die geschlossene Ruheposition verschoben wird.

Die Feder ist insbesondere zwischen der Abdeckung und der Abdeckungshalterung so angeordnet und vorgespannt, dass sie eine Kraft auf die Abdeckung in der offenen Position und in jeder verschobenen Position zwischen der geschlossenen Ruheposition und der offenen Position ausübt, so dass die Abdeckung ohne Einwirkung weiterer äußerer Kräfte auf die Abdeckung aus jeder verschobenen Position zwischen der geschlossenen Ruheposition und der offenen Position in die geschlossene Ruheposition zurückkehrt.

Alternativ oder zusätzlich kann die Abdeckung derart ausgebildet, dass sie in einer bestimmungsgemäßen Orientierung der Abdeckungsvorrichtung, in welcher die Schwerkraft auf die Abdeckung in Richtung der geschlossenen Ruheposition wirkt, ohne Einwirkung weiterer äußerer Kräfte auf die Abdeckung in die geschlossene Ruheposition verschoben wird. Die Abdeckung ist entsprechend dimensioniert sowie die Führung der Abdeckungshalterung entsprechend ausgelegt. In der bestimmungsgemäßen Orientierung der Abdeckungsvorrichtung wirkt die Schwerkraft auf die Abdeckung in jeder verschobenen Position der Abdeckung zwischen der geschlossenen Ruheposition und der offenen Position in Richtung der geschlossenen Ruheposition, so dass alleine durch die Schwerkraft und ohne Einwirkung weiterer äußerer Kräfte auf die Abdeckung diese aus der offenen Position oder jeder Position zwischen der geschlossenen Ruheposition und der offenen Position in die geschlossene Ruheposition selbstständig zurückkehrt.

In einer weiteren Weitbildung ist vorgesehen, dass die Abdeckung schalenförmig, insbesondere halbschalenförmig ausgebildet ist. Dabei kann sie die Form einer einfach gekrümmten Schale annehmen. Die halbschalenförmige Abdeckung ist zur Abdeckungsvorrichtung so ausgerichtet, dass ein Rand der halbschalenförmigen Abdeckung zur Abdeckungshalterung weist oder die halbschalenförmige Abdeckung gar mit ihrem Rand auf der Abdeckungshalterung aufliegt, so dass die Abdeckungshalterung unter der Abdeckung von dieser abgedeckt wird. Eine Längsachse der halbschalenförmigen Abdeckung kann in bestimmungsgemäßer Orientierung der Abdeckungsvorrichtung parallel zur Richtung der Verschiebung der Abdeckung aus der offenen Position in die geschlossene Ruheposition oder umgekehrt ausgerichtet sein.

Gemäß einer Ausführungsform ist die Abdeckung einseitig offen, d.h. auf einer Seite offen auf der gegenüberliegenden Seite geschlossen, insbesondere glockenförmig ausgebildet.

Weitergebildet ist die halbschalenförmig ausgebildete Abdeckung auf einer in der Richtung der Verschiebung aus der geschlossenen Ruheposition in die offene Position weisenden, in bestimmungsgemäßer Orientierung insbesondere oberen, ersten Stirnseite geschlossen ausgebildet. Auf der anderen Stirnseite kann die Abdeckung offen und somit frei zugänglich zum Eingriff für einen Benutzer in die halbschalenförmig ausgebildete Abdeckung ausgebildet sein. In einer vorgegebenen bestimmungsgemäßen Orientierung der Abdeckungsvorrichtung ist die Abdeckung insbesondere unten offen.

Die Abdeckung weist auf einer entgegen der Richtung der Verschiebung aus der geschlossenen Ruheposition in die offene Position weisenden, in bestimmungsgemäßer Orientierung insbesondere unteren, zweiten Stirnseite eine Angriffsfläche für einen Benutzer aufweist, um von einem Benutzer aus der geschlossenen Ruheposition in die offene Position verschoben zu werden. Die Abdeckung ist an ihrer zweiten Stirnseite angreifbar ausgebildet, um eine Kraft zur Verschiebung der Abdeckung in Richtung der offenen Position von einem Benutzer aufzunehmen.

Die Kraft muss vom Benutzer aufgebracht werden, um die Abdeckung aus der geschlossenen Ruheposition in die offene Position entgegen der Schwerkraft und/oder entgegen der Kraft der Federvorspannung zu verschieben.

Die Angriffsfläche ist geeignet ausgebildet zum Angriff der Abdeckung mit einem Armstumpf oder einem Handballen des Benutzers. Hierfür weist die Abdeckung an der zweiten Stirnseite einen Wulst auf.

Eine weitergebildete Abdeckungsvorrichtung weist eine zumindest teilweise transparente Abdeckung auf, so dass der unter der Abdeckung liegende Auslösetaster für einen Benutzer durch die Abdeckung sichtbar ist.

Eine erfindungsgemäße Hilferufeinrichtung für ein Schienenfahrzeug umfasst wenigstens einen Auslösetaster und wenigstens eine erfindungsgemäße Abdeckungsvorrichtung, wobei die Abdeckungsvorrichtung so zum Auslösetaster angeordnet ist, dass die Abdeckung den Auslösetaster in der geschlossenen Ruheposition abdeckt und in der offenen Position frei gibt, so dass dieser zur Betätigung durch einen Benutzer frei zugänglich ist.

Ein erfindungsgemäßes Schienenfahrzeug des Personenverkehrs umfasst wiederum wenigstens eine erfindungsgemäße Hilferufeinrichtung.

Diese ist weitergebildet in wenigstens einer Sanitärzelle des Schienenfahrzeugs angeordnet.

Die Abdeckungsvorrichtung ist weitergebildet bestimmungsgemäß so orientiert, dass die geschlossene Ruheposition einen unteren Totpunkt und die offene Position einen oberen Totpunkt der Verschiebung der Abdeckung zwischen der geschlossenen Ruheposition und der offenen Position bildet.

Gemäß einem erfindungsgemäßen Verfahren zur Betätigung einer erfindungsgemäßen Hilferufeinrichtung sind folgende Verfahrensschritte durchzuführen:
a. Angreifen der Abdeckung;
b. Verschieben der Abdeckung, insbesondere entlang der Führung;
c. Drücken des Auslösetasters.

Die Abdeckung wird an der zweiten Stirnseite in bestimmungsgemäßer Orientierung unter dem Wulst angegriffen. Die Kraft wird dann auf die zweite Stirnseite, insbesondere entgegen der Schwerkraft auf die Abdeckung aufgebracht und die Abdeckung nach oben verschoben.

Dadurch wird der Auslösetaster von unten nach oben frei gelegt, so dass die unterhalb der zweiten Stirnseite angreifenden Finger, Handballen oder Armstumpf durch die Aufschiebebewegung unmittelbar über den Auslösetaster kommen, so dass durch eine einfache Bewegung entgegen den Auslösetaster dieser zu betätigen ist. Aufschieben der Abdeckung durch drücken des Auslösetasters ist alles in einem Zug möglich.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt eine erfindungsgemäße Hilferufeinrichtung mit einer Abdeckung in geschlossener Ruheposition,
- Fig. 2: zeigt die Hilferufeinrichtung aus Fig. 1 mit der Abdeckung in offener Position.

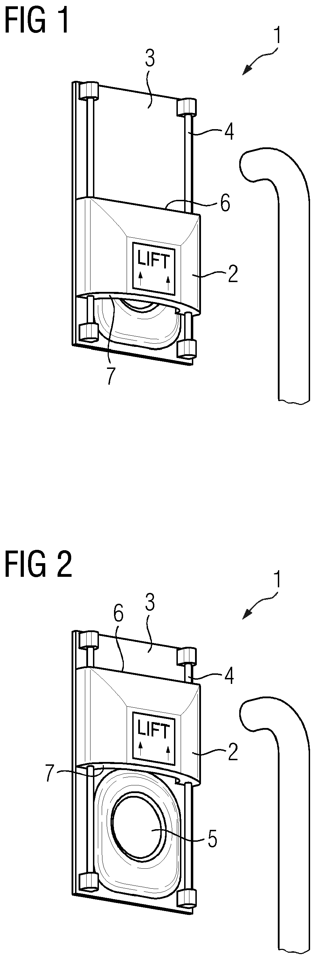

In Fig. 1 sowie in Fig. 2 ist eine Hilferufeinrichtung dargestellt. Eine Abdeckungsvorrichtung 1 umfassend eine Abdeckung 2 zum Schutz eines Auslösetasters 5 vor einer unbeabsichtigten Betätigung und eine Abdeckungshalterung 3.

Die Abdeckung 2 und die Abdeckungshalterung 3 sind derart zueinander ausgebildet und die Abdeckung 2 an der Abdeckungshalterung 3 derart verschiebbar gehalten, hier schienengeführt, dass die Abdeckung 2 entlang einer Führung 4 an der Abdeckungshalterung 3 verschiebbar ist. Die Führung 4 mit den Schienen ist an der Abdeckungshalterung 3 befestigt.

In der offenen Position der Abdeckung 2 gemäß Fig. 2 ist der Auslösetaster 5 frei gegeben, so dass er zur Betätigung für einen Benutzer zugänglich ist. In der geschlossenen Ruheposition gemäß Fig. 1 ist der Auslösetaster 5 hingegen durch die Abdeckung 2 für den Benutzer abdeckt und somit nicht zugänglich.

Die Abdeckung 2 ist glockenartig und halbschalenförmig ausgebildet und auf einer ersten Stirnseite 6 geschlossen sowie an einer zweiten Stirnseite 7 offen.

Darüber hinaus besitzt die Abdeckung 2 an der zweiten Stirnseite 7 einen Wulst, um sie mit einem Armstumpf oder Handballen anheben zu können und dieser den Auslösetaster 5 in der gleichen Bewegung betätigen kann.

Die Hilferufeinrichtung ist hierzu in einer Sanitärzelle eines Schienenfahrzeugs so angeordnet, dass ein gedachter Vektor, der die Richtung anzeigt, in welche die Abdeckung 2 aus der offenen Position in die geschlossene Ruheposition verschoben wird, in Richtung der Schwerkraft zeigt. Somit ist die zweite Stirnfläche 7 auf einer Unterseite der Abdeckung angeordnet.

Eine Hand, ein Handballen oder ein Armstumpf eines Benutzers wird zur Auslösung des Auslösetasters 5 an die Angriffsfläche bzw. den Wulst der zweiten Stirnseite 7 der Abdeckung 2 in deren Ruheposition gelegt, in welcher die Abdeckung 2 geschlossen ist und den Auslösetaster 5 abdeckt, und eine Kraft wird entgegen der Schwerkraft in Richtung der Verschiebung der Abdeckung 2 aus der geschlossenen Ruheposition in die offene Position auf die Abdeckung 2 ausgeübt, die ausreicht, die Abdeckung 2 aus der geschlossenen Ruheposition in die offene Position zu verschieben, in welcher der Auslösetaster 5 frei zugänglich ist. Dann kann mit der Hand, dem Handballen oder dem Armstumpf des Benutzers der Auslösetaster 5 gedrückt und somit Hilfe gerufen werden. Dies ist durch die erfindungsgemäße Konstruktion und Auslegung der Hilferufeinrichtung in einem Zug und ohne zu Hilfenahme einer zweiten Hand nur mit derselben Hand, demselben Handballen oder demselben Armstumpf des Benutzers möglich.

## Patentansprüche

1. Abdeckungsvorrichtung (1) für einen Auslösetaster (5) zum Schutz vor einer unbeabsichtigten Betätigung, umfassend eine Abdeckung (2) und eine Abdeckungshalterung (3), wobei die Abdeckung (2) aus einer geschlossenen Ruheposition in eine offene Position bewegbar ist, wobei die Abdeckung (2) an der Abdeckungshalterung (3) zur Abdeckungshalterung (3) verschiebbar angeordnet ist, so dass sie aus der geschlossenen Ruheposition in die offene Position verschiebbar ist, **dadurch gekennzeichnet, dass** die Abdeckung (2) auf einer zweiten Stirnseite (7) eine Angriffsfläche für einen Benutzer aufweist, wobei die Angriffsfläche entgegen der Richtung der Verschiebung der Abdeckung (2) aus der geschlossenen Ruheposition in die offene Position weist, um von einem Benutzer aus der geschlossenen Ruheposition in die offene Position verschoben zu werden, wobei die Abdeckung (2) an der zweiten Stirnseite (7) einen Wulst zum Angriff der Abdeckung (2) mit einem Armstumpf oder einem Handballen des Benutzers aufweist.

2. Abdeckungsvorrichtung (1) nach Anspruch 1,
**dadurch gekennzeichnet, dass**
die Abdeckungshalterung (3) eine Führung (4) zur Verschiebung der Abdeckung (2) entlang einer vorgegebenen Kurve zwischen der geschlossenen Ruheposition und der offenen Position aufweist.

3. Abdeckungsvorrichtung (1) nach Anspruch 2,
**dadurch gekennzeichnet, dass**
die Führung (4) Schienen aufweist, entlang welcher die Abdeckung (2) verschiebbar geführt ist.

4. Abdeckungsvorrichtung (1) nach einem der Ansprüche 1 bis 3,
**dadurch gekennzeichnet, dass**
sie eine Feder umfasst, welche zwischen der Abdeckung (2) und der Abdeckungshalterung (3) derart vorgespannt ist, dass sie eine Kraft auf die Abdeckung (2) ausübt, welche in Richtung der Verschiebung der Abdeckung (2) aus der offenen Position in die geschlossene Ruheposition wirkt, so dass die Abdeckung (2) ohne Einwirkung weiterer äußerer Kräfte auf die Abdeckung (2) aus einer aus der geschlossenen Ruheposition heraus verschobenen Position in die geschlossene Ruheposition verschoben wird.

5. Abdeckungsvorrichtung (1) nach einem der Ansprüche 1 bis 4,
**dadurch gekennzeichnet, dass**
die Abdeckung (2) derart ausgebildet ist, dass sie in einer bestimmungsgemäßen Orientierung der Abdeckungsvorrichtung (1), in welcher die Schwerkraft auf die Abdeckung (2) in Richtung der Verschiebung der Abdeckung (2) aus der offenen Position in die geschlossene Ruheposition wirkt, ohne Einwirkung weiterer äußerer Kräfte auf die Abdeckung (2) aus einer aus der geschlossenen Ruheposition heraus verschobenen Position in die geschlossene Ruheposition verschoben wird.

6. Abdeckungsvorrichtung (1) nach einem der Ansprüche 1 bis 5,
**dadurch gekennzeichnet, dass**
die Abdeckung (2) halbschalenförmig ausgebildet ist.

7. Abdeckungsvorrichtung (1) nach Anspruch 6,
**dadurch gekennzeichnet, dass**
die halbschalenförmig ausgebildete Abdeckung (2) auf einer ersten Stirnseite (6) geschlossen ist.

8. Abdeckungsvorrichtung (1) nach einem der Ansprüche 1 bis 7,
**dadurch gekennzeichnet, dass**
die Abdeckung (2) zumindest teilweise transparent ausgebildet ist.

9. Hilferufeinrichtung für ein Schienenfahrzeug umfassend wenigstens einen Auslösetaster (5) und wenigstens eine Abdeckungsvorrichtung (1) nach einem der Ansprüche 1 bis 8, wobei die Abdeckungsvorrichtung (1) so zum Auslösetaster angeordnet ist, dass die Abdeckung (2) den Auslösetaster (5) in der geschlossenen Ruheposition abdeckt und in der offenen Position frei gibt.

10. Schienenfahrzeug des Personenverkehrs umfassend wenigstens eine Hilferufeinrichtung nach Anspruch 9.

11. Schienenfahrzeug nach Anspruch 10,
**dadurch gekennzeichnet, dass**
es wenigstens eine Sanitärzelle umfasst, in welcher die Hilferufeinrichtung angeordnet ist.

12. Verfahren zur Betätigung einer Hilferufeinrichtung nach Anspruch 9, **gekennzeichnet durch** folgende Verfahrensschritte:
a. Angreifen der Abdeckung (2) an der zweiten Stirnseite in bestimmungsgemäßer Orientierung der Abdeckungsvorrichtung (1) unter dem Wulst durch einen Benutzer;
b. Aufbringen einer Kraft auf die Abdeckung (2) und Verschieben der Abdeckung (2) aus einer geschlossenen Ruheposition in eine offene Position;
c. Drücken eines in der offenen Position der Abdeckung (2) frei zugänglichen Auslösetasters (5).

## Claims

1. Covering apparatus (1) for a trigger button (5) for protection against inadvertent actuation, comprising a cover (2) and a cover holder (3), wherein the cover (2) is movable from a closed rest position into an open position, wherein the cover (2) is arranged on the cover holder (3) so as to be displaceable in relation to the cover holder (3), such that it is displaceable from the closed rest position into the open position, **characterized in that** the cover (2) has an engagement surface for a user on a second end face (7), wherein the engagement surface faces in a direction opposite to the direction of displacement of the cover (2) from the closed rest position into the open position in order to be displaced by a user from the closed rest position into the open position, wherein, on the second end face (7), the cover (2) has a bead for engagement with the cover (2) by an arm stump or the ball of a thumb of the user.

2. Covering apparatus (1) according to Claim 1,
**characterized in that**
the cover holder (3) has a guide (4) for displacement of the cover (2) along a predefined curve between the closed rest position and the open position.

3. Covering apparatus (1) according to Claim 2,
**characterized in that**
the guide (4) has rails along which the cover (2) is guided in a displaceable manner.

4. Covering device (1) according to one of Claims 1 to 3,
**characterized in that**
said covering device comprises a spring which is pre-stressed between the cover (2) and the cover holder (3) in such a way as to exert a force on the cover (2) that acts in the direction of displacement of the cover (2) from the open position into the closed rest position, so that the cover (2), without action of further external forces on the cover (2), is displaced into the closed rest position from a position which is displaced from the closed rest position.

5. Covering device (1) according to one of Claims 1 to 4,
**characterized in that**
the cover (2) is designed in such a way that, in an intended orientation of the covering apparatus (1), in which gravitational force acts on the cover (2) in the direction of displacement of the cover (2) from the open position into the closed rest position, said cover, without action of further external forces on the cover (2), is displaced into the closed rest position from a position which is displaced from the closed rest position.

6. Covering device (1) according to one of Claims 1 to 5,
**characterized in that**
the cover (2) is of half-shell-like form.

7. Covering apparatus (1) according to Claim 6,
**characterized in that**
the half-shell-like cover (2) is closed at a first end face (6).

8. Covering device (1) according to one of Claims 1 to 7,
**characterized in that**
the cover (2) is at least partially of transparent form.

9. Call-for-assistance device for a rail vehicle, comprising at least one trigger button (5) and at least one covering apparatus (1) according to one of Claims 1 to 8, wherein the covering apparatus (1) is arranged in relation to the trigger button in such a way that the cover (2) covers the trigger button (5) in the closed rest position and releases it in the open position.

10. Rail vehicle for passenger transport comprising at least one call-for-assistance device according to Claim 9.

11. Rail vehicle according to Claim 10,
**characterized in that**
said rail vehicle comprises at least one sanitary unit in which the call-for-help device is arranged.

12. Method for actuating a call-for-assistance device according to Claim 9, **characterized by** the following method steps:
a. engagement by a user with the cover (2) at the second end face, below the bead in the intended orientation of the covering apparatus (1);
b. application of a force to the cover (2) and displacement of the cover (2) from a closed rest position into an open position;
c. pressing of a trigger button (5) which is freely accessible in the open position of the cover (2).

## Revendications

1. Dispositif (1) de recouvrement d'une touche (5) de déclenchement pour la protéger d'un actionnement intempestif, comprenant un recouvrement (2) et une fixation (3) de recouvrement, dans lequel le recouvrement (2) peut passer d'une position de repos fermée à une position ouverte, dans lequel le recouvrement (2) est monté sur la fixation (3) de recouvrement, de manière à pouvoir coulisser par rapport à la fixation (3) de recouvrement, de manière à pouvoir passer par coulissement de la position de repos fermée à la position ouverte, **caractérisé en ce que** le recouvrement (2) a, sur un deuxième côté (7) frontal, une surface d'attaque pour un utilisateur, dans lequel la surface d'attaque passe de la position de repos fermée à la position ouverte à l'encontre du sens de coulissement du recouvrement (2) et peut être déplacée par un utilisateur de la position de repos fermée à la position ouverte, dans lequel le recouvrement a, sur le deuxième côté (7) frontal, un bourrelet d'attaque du recouvrement (2) par le moignon de bras ou la paume de l'utilisateur.

2. Dispositif (1) de recouvrement suivant la revendication 1,
**caractérisé en ce que**
la fixation (3) du recouvrement a un guidage (4) pour le coulissement du recouvrement (2) le long d'une courbe donnée à l'avance entre la position de repos fermée et la position de repos ouverte.

3. Dispositif (1) de recouvrement suivant la revendication 2,
**caractérisé en ce que**
le guidage (4) à des rails le long desquels le recouvrement (2) est guidé à coulissement.

4. Dispositif (1) de recouvrement suivant l'une des revendications 1 à 3,
**caractérisé en ce qu'**
il comprend un ressort, qui est précontraint entre le recouvrement (2) et la fixation (3) du recouvrement, de manière à appliquer une force au recouvrement (2), qui s'applique, dans le sens du coulissement du recouvrement (2) de la position ouverte à la position de repos fermée, de sorte que le recouvrement (2) passe, sans l'application d'autre force extérieure au recouvrement (2), d'une position décalée par rapport à la position de repos fermée à la position de repos fermée.

5. Dispositif (1) de recouvrement suivant l'une des revendications 1 à 4,
**caractérisé en ce que**
le recouvrement (2) est constitué de manière à passer, dans une orientation conforme aux prescriptions du dispositif (1) de recouvrement, dans laquelle la force de gravité s'applique au recouvrement (2) dans le sens du coulissement du recouvrement (2) de la position ouverte à la position de repos fermée, d'une position décalée par rapport à la position de repos fermée à la position de repos fermée, sans application d'autre force extérieure au recouvrement (2).

6. Dispositif (1) de recouvrement suivant l'une des revendications 1 à 5,
**caractérisé en ce que**
le recouvrement (2) est en forme de demi-coque.

7. Dispositif (1) de recouvrement suivant la revendication 6,
**caractérisé en ce que**
le recouvrement (2) constitué en forme de demi-coque est fermé sur un premier côté (6) frontal.

8. Dispositif (1) de recouvrement suivant l'une des revendications 1 à 7,
**caractérisé en ce que**
le recouvrement (2) est transparent au moins en partie.

9. Dispositif d'appel d'urgence d'un véhicule ferroviaire comprenant au moins une touche (5) de déclenchement et au moins un dispositif (1) de recouvrement suivant l'une des revendications 1 à 8, dans lequel le dispositif (1) de recouvrement est disposé par rapport à la touche de déclenchement, de manière à ce que le recouvrement (2) recouvre la touche (5) de déclenchement dans la position de repos fermée et la dégage dans la position ouverte.

10. Véhicule ferroviaire de transport des personnes, comprenant un dispositif d'appel d'urgence suivant la revendication 9.

11. Véhicule ferroviaire suivant la revendication 10,
**caractérisé en ce qu'**
il comprend au moins un module sanitaire, dans lequel le dispositif d'appel d'urgence est disposé.

12. Procédé d'actionnement d'un dispositif d'appel d'urgence suivant la revendication 9, **caractérisé par** les stades de procédé suivants :
a. attaque du recouvrement (2) sur le deuxième côté frontal dans l'orientation conforme aux prescriptions du dispositif (1) de recouvrement sous le bourrelet par un utilisateur ;
b. application d'une force au recouvrement (2) et coulissement du recouvrement (2) de la position de repos fermée à une position ouverte ;
c. pression sur une touche (5) de déclenchement accessible librement dans la position ouverte du recouvrement (2).
